(19) Europäisches Patentamt

European Patent Office

Office européen des brevets

(11) **EP 1 669 829 A2**

(12) **EUROPEAN PATENT APPLICATION**

(43) Date of publication:
**14.06.2006 Bulletin 2006/24**

(51) Int Cl.:
***G05B 19/416*** (2006.01)

(21) Application number: **05257294.8**

(22) Date of filing: **28.11.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **07.12.2004 JP 2004354389**

(71) Applicant: **FANUC LTD
Minamitsuru-gun,
Yamanashi 401-0597 (JP)**

(72) Inventors:
• **Iwashita, Yasusuke
  Yamanashi, 403-0003 (JP)**

• **Okita, Tadashi
  Yamanashi, 403-0005 (JP)**
• **Kawamura, Hiroyuki
  Minamitsuru-gun
  Yamanashi, 401-0301 (JP)**
• **Ikai, Satoshi
  FANUC Dai3virakaramatsu
  Minamitsuru-gun
  Yamanashi, 401-0511 (JP)**

(74) Representative: **Billington, Lawrence Emlyn et al
Haseltine Lake,
Imperial House,
15-19 Kingsway
London WC2B 6UD (GB)**

(54) **Controller with means for determining acceleration**

(57) In a controller, V axis and W axis for driving a driven body (3) are tilting, not orthogonal to each other. An acceleration detector (7) capable of detecting accelerations in a plurality of directions orthogonal to the driven body (3) is arranged so that W-axis direction may meet Y-axis direction of an acceleration detected by the acceleration detector. An acceleration (Av) in the V-axis direction is determined by making calculations from accelerations (Ax,Ay) in X-axis and Y-axis directions detected by acceleration detectors (7). Based on the determined accelerations (Av,Aw) in the V-axis and W-axis directions, a position command, a speed command or a current command to servo motors (2v,2w) driving the V axis and W axis is corrected. Such correction suppresses the driven body (3) from generation of vibrations.

ACCELERATION IN W-AXIS DIRECTION $Aw = Ay$

V AXIS

ACCELERATION IN V-AXIS DIRECTION
$Av = Ay\cos\theta - Ax\sin\theta$

ACCELERATION IN Y-AXIS DIRECTION $Ay$

ACCELERATION IN X-AXIS DIRECTION $Ax$

FIG. 1

EP 1 669 829 A2

**Description**

BACKGROUND OF THE INVENTION

Field of the Invention

The present invention relates to a controller which drives a driven body by a servo motor and which controls a position and a speed of the driven body.

Description of the Related Art

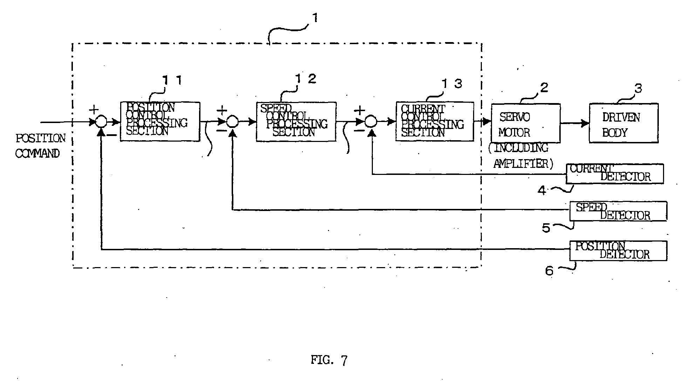

To control a position and a speed of the driven body driven by the servo motor, a machine tool usually performs position feedback control, speed feedback control and current feedback control. FIG. 7 is a schematic block diagram of a servo control section for controlling the servo motor. The servo motor 2 or the driven body 3 driven by the servo motor 2 is provided with a position detector 6 and a speed detector 5 for detecting a position and a speed of the driven body 3 respectively. Furthermore, there is also provided a current detector 4 for detecting a current value for driving the servo motor 2. The detection signals of the detectors 4, 5 and 6 are fed back.

A motor control section 1, in which processor-controlled digital control is performed, consists of a position control processing section 11 for performing position loop processing, a speed control processing section 12 for performing speed loop control and a current control processing section 13 for performing current loop processing. The position control processing section 11 determines a position deviation from both of a position command and a position feedback signal from the position detector 6, and determines a speed command by muliplying the position deviation by a position loop gain. The speed control processing section 12 determines a speed deviation from both of a speed command outputted from the position control processing section 11 and a speed feedback signal from the speed detector 5, and performs speed feedback control such as proportion, integration (or subtraction of a proportional component of the speed feedback signal from integration of the speed deviation) to determine a current command. The current control processing section 13 performs current feedback control from the current command and the current feedback signal to drivingly control the servo motor 2 through a servo amplifier.

These processing are widely used as control processing of positions, speeds and currents of the driven body 3 such as a feed shaft of a machine tool, and are usually performed by a processor. Even by performing the feedback control of positions, speeds and currents, vibrations sometimes occur in the driven body 3 when an angular acceleration of the servo motor 2 make a sudden change. As the measures, there is disclosed in Japanese Patent Application Laid-Open No. 6-91482 a control method in which an acceleration sensor for detecting an acceleration of the driven body 3 is provided to subtract a signal from the acceleration sensor from a current command outputted by the speed feedback control and take the obtained value as a current command of the current feedback control.

According to the above-mentioned control method, if vibrations occur in a driven body, a vibration component included in an acceleration signal of the driven body detected by the acceleration sensor becomes an error against a current command for the current feedback control. Accordingly, the acceleration signal of the driven body detected by the acceleration sensor is subtracted from the current command so as to eliminate the error and a driving current of the servo motor is controlled, thus restraining the vibration.

An acceleration sensor for detecting accelerations in the directions of two or three axes orthogonal to each other is well known. If driving shafts for driving a driven body respectively are of two-axis or three-axis orthogonal to each other, the accelerations in respective driving shaft directions can be detected with the acceleration sensor for detecting accelerations in the directions of the two or three axes, which is installed onto the driven body, thereby correcting a current command and restraining vibration in the driven body.

However, in the case of a machine provided with an axis of tilt in which driving shaft is tilted, even if the acceleration sensor is attached onto a driven body, an acceleration in the driving shaft direction connot be sometimes detected. That is, in the case of a machine in which driving shafts for driving the driven body is not orthogonal to each other, even if the acceleration sensor is mounted on the driven body so as to detect an acceleration along one of the driving shafts, an acceleration in the driving shaft direction under a tilting state without being orthogonal to the driving shaft cannot be detected by the acceleration sensor. To detect the acceleration, an acceleration sensor capable of detecting respective accelerations for each driving shaft direction is required to be mounted, which causes a problem of an increase in the number of the acceleraton sensors.

In the case where a driving shaft for linearly moving a driven body and a driving shaft for performing oscillation while rotating are provided, even if the acceleration sensor is mounted on the driven body, an acceleration in a linearly moving driving shaft direction cannot be detected, which causes a problem that a vibration restraint method for the driven body using an acceleration sensor cannot be applied.

Furthermore, in the case of a driving shaft affected by gravity such as an axis of tilt, an acceleration detected by an acceleration sensor has been already affected by gravity, which causes a problem that the acceleration detected by the acceleration sensor cannot be used as an acceleration of the driven body in the driving shaft direction as it is.

SUMMARY OF THE INVENTION

According to a first aspect of the present invention, A controller, equipped with servo motors for driving a driven body in a plurality of driving shaft directions different from each other, respectively, and detection means for detecting speed of the driven body to control the speed of the driven body, comprises: acceleration detection means which is installed on the driven body and detects accelerations in a plurality of directions; acceleration calculating means for determining accelerations in the directions of respective driving shafts for driving the driven body based on the acceleration detection values in a plurality of directions detected by the acceleration detection means; and command correction means for correcting speed commands and/or current commands of the servo motors for driving the driving shafts based on the accelerations in the directions of the respective driving shafts determined by the acceleration calculating means so as to suppress the driven body from vibrating.

In the controller of the first aspect of the present invention, the acceleration detection means may detect accelerations in two or three directions orthogonal to each other, and the acceleration calculating means may calculate accelerations in the directions of the driving shafts of the driven body not parallel to the directions of the accelerations detected by the acceleration detection means, from the detected accelerations in two or three directions. Moreover, the controller may comprise displacement calculating means for calculating a displacement amount between the direction of the acceleration detected by the acceleration detection means and direction of the driving shaft for driving the driven body is provided. And the acceleration calculation means may calculate an accelerations in the direction of the driving shaft of the driven body not parallel to the accelerations detected by the acceleration detection means from the accelerations in two or three directions detected by the acceleration detection means and a displacement amount detected by the displacement calculation means.

The driven body may be installed on a base equipped with a rotation driving shaft for swinging the driven body, the acceleration calculation means may determine an acceleration in the driving direction of the driving shaft for driving the base from the acceleration detection values detected by the acceleration detection means, and the command correction means may correct a speed command and/or a current command of the servo motor for driving the base driving shaft, based on the accelerations determined by the acceleration calculation means.

The controller may control the position of the driven body, in addition to the speed of the driven body, and the command correction means may correct a speed command of the servo motors for driving the driving shafts based on accelerations in the directions of the respective driving shafts determined by the acceleration calculating means, in addition to, or in place of, the speed command and/or current command of the servo motors.

The acceleration calculation means may determine an acceleration of a driving shaft affected by gravity by making such a calculation as to eliminate an influence of the gravity from a displacement amount between a direction of the driving shaft and a direction of the gravity.

According to a second aspect of the present invention, a controller, equipped with servo motors for driving a driven body in a plurality of driving shaft directions different from each other, respectively, and detection means for detecting the position of, or the position and speed of, the driven body to control the speeds of the driven body, comprises: acceleration detection means which is installed on the driven body and detects accelerations in two or three directions orthogonal to each other; displacement estimation means for estimating a displacement amount between a direction of the acceleration detected by the acceleration detection means and that of the driving shaft for driving the driven body based on a command position; acceleration calculation means for determining an acceleration of the driven body in a traveling direction from the detected accelerations in the two or three directions detected by the acceleration detection means and the displacement amount detected by the displacement estimation means; and command correction means for correcting at least one of a position command, a speed command and a current command of the servo motor for driving the associated driving shaft, based on the acceleration calculated by the acceleration calculation means.

In the controller of the second aspect of the present invention, the driven body may be installed on a base having a rotation driving shaft for swinging the driven body, the acceleration calculation means may determine an acceleration in the driving direction of the driving shaft for driving the base from the acceleration detection value detected by the acceleration detection means, and the command correction means may correct at least one of a position command, a speed command and a current command of the servo motor for driving the base driving shaft based on the accelerations determined by the acceleration calculation means.

The acceleration calculation means may determine an acceleration of a driving shaft affected by gravity by making such a calculation as to eliminate an influence of the gravity from a displacement amount between a direction of the driving shaft and a direction of the gravity.

The controller according to the present invention, having the above-mentioned structure, may determine a required acceleration in a driving shaft direction by means for arithmetic processing without need for increasing the number of the acceleration detection means, even if the acceleration detection means capable of detecting accelerations in a plurality of directions cannot directly detect accelerations in the driving shaft direction for a driven body, and perform such a control as to restrain vibration of the driven body based on the acceleration determined by the arithmetic processing. Even if driving shafts are not orthogonal to each other, a rotating shaft tilting a driven body is provided or a driving shaft affected by gravity is provided, accelerations in respective shaft directions may be determined to perform vibration suppression control for a driven body by attaching one acceleration detector onto the driven body.

BRIEF DESCRIPTION OF THE DRAWINGS

The above and other objects, features and advantages of the present invention will be apparent from the following detailed description of the preferred embodiments of the invention in conjunction with the accompanying drawings, in which:

FIG. 1 is a view illustrating an aspect where a first embodiment of a controller according to the present invention controls a machine having an axis of tilt;
FIG. 2 is a block schematic diagram of a motor control section for controlling servo motors driving V axis and W axis in a first embodiment of a controller according to the present invention;
FIG. 3 is a view illustrating an aspect where a second embodiment of a controller according to the present invention controls a machine having a rotation driving shaft tilting a driven body;
FIG. 4 is a view illustrating determination of an acceleration in X-axis direction under a state where a head 3 and a tool T of the driven body illustrated in FIG. 3 are displaced by a rotational angle $\theta$ from X-axis by a rotation of C-axis;
FIG. 5 is a view illustrating an aspect where a third embodiment of a controller according to the present invention controls a machine having two rotating shafts;
FIG. 6 is a view illustrating an aspect where a fourth embodiment of a controller according to the present invention controls a machine having a driving shaft and a rotating shaft affected by gravity; and
FIG. 7 is a schematic block diagram of an essential part of a conventional servo control section for controlling a servo motor.

DETAILED DESCRIPTION OF THE PREFERRED EMBODIMENTS

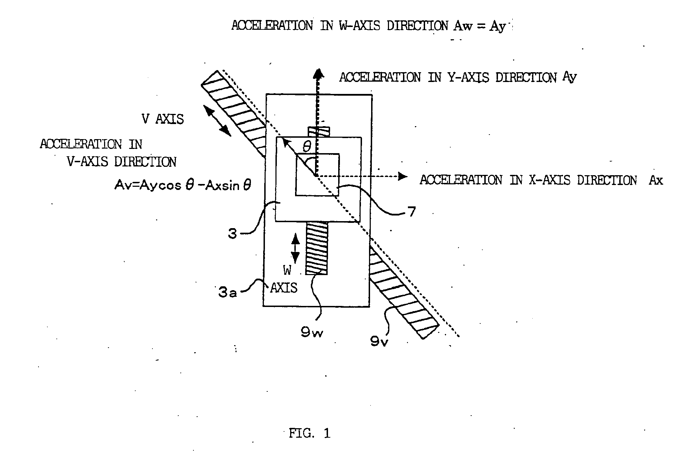

FIG. 1 is a view illustrating an aspect where a first embodiment of a controller according to the present invention controls a machine having an axis of tilt;
The driven body 3 is driven by two driving shafts on V axis and W axis, which are located tilting without being orthogonal to each other. In this embodiment, a feed screw 9v on the V axis drives a base 3a of the driven body 3 in the V-axis direction and a feed screw 9w on the W axis drives the driven body 3 in the W-axis direction on the base 3a. The driven body 3 is installed with an acceleration detector 7. The acceleration detector 7 to be used can detects accelerations in two-axis directions (taken as X-axis and Y-axis directions for convenience) orthogonal to each other, and is installed so that the Y-axis direction of one of directions of the accelerations detected by the acceleration detector 7 may meet the W-axis direction of the driving shaft.
The acceleration detector installed on the driven body 3 can detect only the accelerations in the two (or three) directions orthogonal to each other, therefore if a direction of one driving shaft on either V-axis or W-axis (W-axis in FIG. 1) is made to meet one of directions of the accelerations detected by the acceleration detector 7, a direction of the other driving shaft (V-axis in FIG. 1) will not meet the other one of the directions of the accelerations detected by the acceleration detector 7 because the V axis and the W axis are not orthogonal to each other.
In the present invention, the acceleration in the V-axis direction is determined by calculating the acceleration from accelerations Ax, Ay in X-axis and Y-axis directions, orthogonal to each other, detected by the acceleration detector. The W-axis direction and Y-axis direction are the same, therefore the detected acceleration Ay in Y-axis is taken as an acceleration Aw in the W-axis direction.
An acceleration Av in the V-axis direction is determined by calculating the following equation (1) from the detected accelerations Ax, Ay in the X-axis and Y-axis directions, where $\theta$ is a crossing angle between the V-axis and the W-axis:

$$Av = Ay \cdot \cos\theta - Ax \cdot \sin\theta \qquad \ldots\ldots\ldots (1)$$

Thus, accelerations in respective driving shaft directions can be detected by one acceleration detector without need for arranging an acceleration detector for each driving shaft.

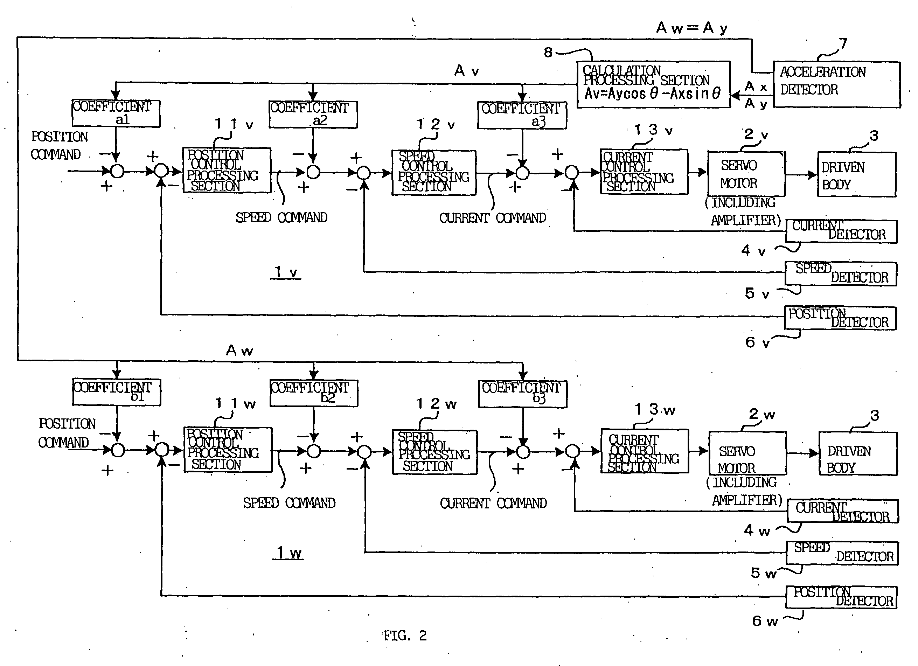

FIG. 2 is a schematic block diagram of a motor control section for controlling a servo motor driving the V axis and W axis in a first embodiment of a controller according to the present invention.

The motor control sections 1v, 1w of the servo motor driving the V axis and W axis have almost the same configuration as a conventional motor control section 1 illustrated in FIG. 7. A deviation from those in FIG. 7 is to suppress vibrations of a driven body by correcting at least one of a position command, a speed command and a current command based on an acceleration in the driving direction determined by the detection or calculation.

The respective motor control sections 1v, 1w includes: position control processing sections 11v, 11w which determines a position deviation between a position command from a host controller and a position feedback from position detectors 6v, 6w for detecting a position of a driven body in the driving direction (or rotational positions of servo motors 2v, 2w) and which determines a speed command from the determined position deviation; speed control processing sections 12v, 12w for determining a current command from the determined speed command and a speed feedback from speed detectors 5v, 5w for detecting a speed of the driven body in the driving direction (or speeds of servo motors 2v, 2w); and current control processing sections 13v, 13w which perform current loop control processing from the determined current command and a current feedback from current detectors 4v, 4w for detecting driving currents passing through the respective servo motors and which output a driving current command to the motor, respectively. The respective servo motors 2v, 2w are driven through a servo amplifier based on a driving voltage command outputted from the current control processing sections 13v, 13w, thus driving the driven body 3.

Moreover, in this embodiment, an arithmetic processing section 8 performs calculation of the above equation (1) from accelerations in the X-axis and Y-axis directions, orthogonal to each other, detected by the acceleration detector 7 installed on the driven body 3 to determine the acceleration Av in the V-axis direction and corrects a position command, a speed command and a current command of the servo motor 2v for driving the V axis based on the acceleration Av. For the servo motor 2w for driving the W axis, if Ay in the Y-axis direction detected by the acceleration detector 7 is taken as an acceleration Aw in the W-axis direction, a position command, a speed command and a current command are corrected based on the acceleration Aw.

Any one or at least two of the following three is performed: a corrected position command is obtained by subtracting from a position command a value obtained by multiplying an acceleration Av in the V-axis direction obtained by calculation by a coefficient al; a corrected speed command is obtained by subtracting from a speed command a value obtained by multiplying an acceleration Av by a coefficient a2; and a corrected current command is obtained by subtracting from a current command a value obtained by multiplying an acceleration Av by a coefficient a3.

For the W axis, in the same way as the above, any one or at least two of the following three is performed: a corrected position command is obtained by subtracting from a position command a value obtained by multiplying a detected acceleration Aw in the W-axis direction by a coefficient b1; a corrected speed command is obtained by subtracting from a speed command a value obtained by multiplying an acceleration Aw by a coefficient b2; and a corrected current command is obtained by subtracting from a current command a value obtained by multiplying an acceleration Aw by a coefficient b3.

As described above, accelerations Av, Aw of the V axis and W axis for driving the driven body 3 are determined, and at least one of a position command, a speed command and a current command of the servo motors 2v, 2w for driving the respective driving shafts is corrected based on the accelerations Av, Aw, thereby suppressing vibrations of the driven body. If the acceleration is large, the position command, the speed command or the current command is significantly subtracted. On the other hand, if the acceleration is small, the position command, the speed command or the current command is subtracted only a little, thereby suppressing vibrations of the driven body with high efficiency. The suppression of vibrations of the driven body by correcting a current command based on acceleration is disclosed by Japanese Patent Application Laid-Open No. 6-91482 mentioned above. On the other hand, the suppression of vibrations of the driven body by correcting a position command or a speed command based on acceleration is described in detail by Japanese Patent Application Serial No. 2004-341770, therefore the description thereof is omitted.

In the above-mentioned first embodiment, a case where the driving shafts for driving the driven body 3 are two: V axis and W axis. In the case where the driven body 3 is driven by three-axis of which driving directions are different from each other, an acceleration detector capable of detecting accelerations in the three-axis directions orthogonal to each other is used. In this case, if there are two driving shafts orthogonal to each other, the acceleration detector is installed on the driven body so that the axial directions of the two-axis driving shafts coincide with two orthogonal acceleration detection directions of the acceleration detector, and an acceleration in the axial direction of the remaining driving shaft is determined by calculating it from accelerations in the three-axis directions orthogonal to each other and an inclination angle. If the three driving shafts are not orthogonal to each other, the acceleration detector is installed on the driven body so that the axial direction of one driving shaft out of three driving shafts coincides with one of the acceleration detection directions of the acceleration detector capable of detecting accelerations in the three-axis directions orthogonal to each other, and accelerations in the directions of the remaining driving shafts is determining by calculating it based on the inclination angle and the accelerations in the three-axis directions detected by the acceleration detectors.

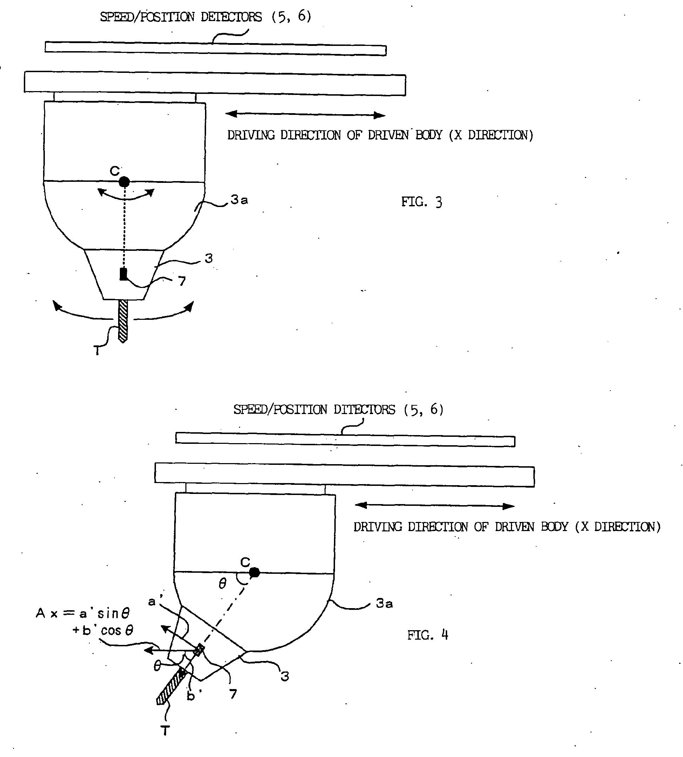

FIG. 3 is a view illustrating an aspect where a second embodiment of a controller according to the present invention controls a machine having a rotation driving shaft tilting a driven body.

In this embodiment, a driven body is taken as a spindle head 3 to which a tool T is to be mounted. The driven body has the spindle head 3, a driving shaft for moving the base 3a installed with the spindle head 3 and the rotation driving shaft which tilts the spindle head 3. For the driven body shown in FIG. 3, the base 3a of the spindle head 3 is driven in the X-axis direction by the driving shaft on the X-axis for performing linear operations, and the spindle head 3 and the tool T installed on the spindle head 3 are configured to be swung and tilted by the C-axis for driving rotation around an axis vertical to the X-axis.

In the case of a controller equipped with such a rotation driving shaft tilting the driven body, a direction of the acceleration detected by the acceleration detector 7 varies with a rotational amount of the C-axis of the rotation driving shaft, or a tilting position of the head 3. Operation of the C-axis of the rotation driving shaft tilting the head 3 and the tool T is slow and few vibrations are generated at the head 3 and the tool T by driving of the C-axis, which are negligible. However, the speed of the X-axis driving the base 3a of the head 3 is much higher than a driving speed of the C-axis, and driving of the X-axis causes vibrations to be given to the head 3 and the tool T. Therefore, accelerations of the driven bodies (the head 3 and the tool T) in the X-axis direction are determined and a position command, a speed command and a current command are corrected so as to generate no vibrations in the same way as in the first embodiment.

FIG. 4 is a view illustrating determination of an acceleration in X-axis direction under a state where a head 3 and a tool T of the driven body illustrated in FIG. 3 are displaced by a rotational angle θ from X-axis by a rotation of C-axis.

The acceleration detector 7 is installed on the head 3 so that an acceleration of the tool T in the axial direction b and an acceleration in a direction a orthogonal to the axial direction b of the tool T can be detected. Here, if an acceleration of the tool T in the axial direction b and an acceleration in the direction a orthogonal to the axial direction b of the tool T, detected by the acceleration detector 7, are taken as a' and b' , respectively, then an acceleration Ax in the X-axis direction can be determined by calculating the following equation (2):

$$Ax = a' \sin\theta + b' \cos\theta \qquad\qquad \ldots\ldots\ldots (2)$$

A rotational angle θ indicates a displacement amount between a direction of an acceleration detected by the acceleration detector 7 and X-axis direction of a driving shaft and can be detected by a detector for detecting the rotational position and speed of the C-axis. Moreover, the rotational angle θ can be estimated from a rotational position command to the C-axis.

On the basis of the acceleration Ax determined in the above way, a position command, a speed command and a current command can be corrected by the motor control section for drivingly controlling the servo motor driving the X-axis in the same way as for the first embodiment, thus suppressing vibrations of the driven bodies (the head 3 and the tool T).

In other words, in the case of the second embodiment, the servo motor 2v in FIG. 2 is used as a servo motor driving the X-axis and it is sufficient that the calculation processing section 8 in FIG. 2 is structured so that an acceleration Ax in the X-axis direction is determined by calculating the above equation (2) andapositioncommand, a speed command or a current command is corrected by multiplying the determined acceleration Ax by a coefficient a1, a coefficient a2 or a coefficient a3, respectively. Because no correction is made for the C-axis, the motor control section of the servo motor of the C-axis uses a conventional motor control section as illustrated in FIG. 7.

In a case where there is an axis driving the base 3a of the head 3, in addition to the X-axis, a speed command or a current command to the servo motor driving the axis can be corrected by additionally determining an acceleration in the axial direction of the axis driving the base 3a. As illustrated in FIG. 3 and FIG. 4, for example, in a case where there is anaxis (e.g. Y-axis) driving the head base 3a in such a direction (an axial direction of the C-axis) as to penetrate the drawing sheet, orthogonal to the X-axis, an acceleration detector capable of detecting accelerations of three axes orthogonal to each other is used and it is sufficient to make the Y-axis direction meet one of directions of accelerations detected by the acceleration detector. In a case where there is an axis (e.g. Z-axis) driving the head base 3a vertically (in the up-down direction in the drawing sheet), the acceleration in the Z-axis direction varies with the rotational amount θ of the C-axis, therefore the acceleration in the Z-axis direction can be determined based on the rotational amount of the C-axis and respective detected accelerations.

In the above-mentioned second embodiment, there is illustrated an example of the driving shaft driving the base 3a of the head 3 existing on a linearly moving axis, however, the axis may be a rotation driving shaft for revolving the base 3a of the head 3.

As described above, even for a machine equipped with a driving shaft tilting and rotating a driven body, accelerations of a driving shaft can be detected with an acceleration detector capable of detecting accelerations in a plurality of directions and, based on the detected accelerations, correction can be made so as to suppress vibrations of the driven body.

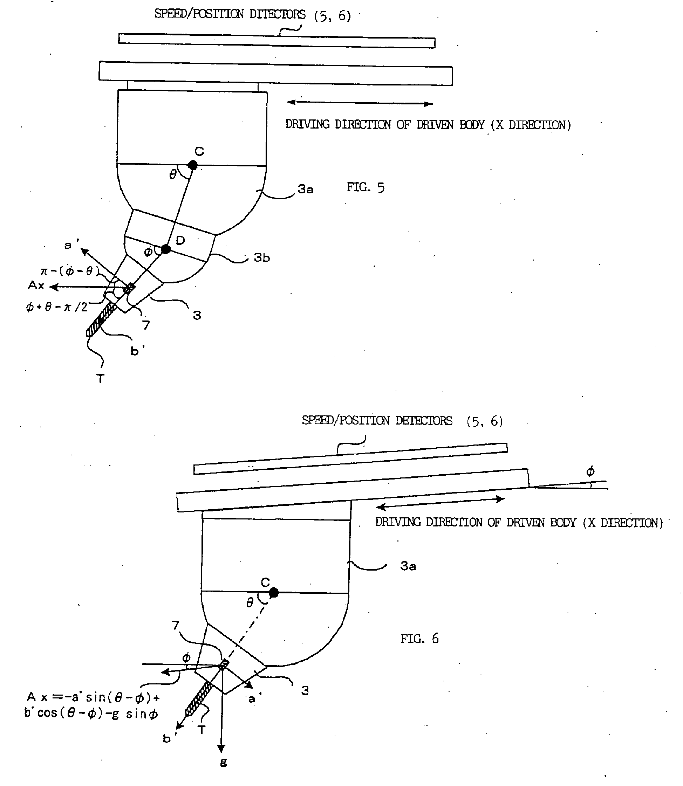

FIG. 5 is a view illustrating an aspect where a third embodiment of a controller according to the present invention controls a machine having two rotating shafts.

In this embodiment, the acceleration detector 7 is installed on the head 3 to which the tool T is to be mounted. The head 3 is rotated by the C-axis and the D axis of the rotation driving shaft with the base 3a and the base 3b. In this case, if an angle between a line connecting the center of the C-axis with the center of the D axis and a line parallel to the X-axis is taken as $\theta$ and an angle between a line connecting the center of the D axis with the front end of the tool T and a line parallel to the X-axis is taken as $\phi$, these angles $\theta$ and $\phi$ can be detected by a detector for detecting rotational positions of the C-axis and the D axis. Moreover, these angles $\theta$ and $\phi$ can be estimated from position commands to the C-axis and the D axis.

Thus, an acceleration Ax in the X-axis direction can be determined from these angles $\theta$ and $\phi$ and accelerations detected by the acceleration detector 7. The accelerations which can be determined by the acceleration detector 7 are an acceleration of the tool T in the axial direction b and an acceleration in a direction a orthogonal to the axial direction b. If an acceleration of the tool T in the axial direction b is taken as b' and an acceleration in a direction a orthogonal to the axial direction b is taken as a', the acceleration Ax in the X-axis direction can be determined by calculating the following equation (3):

$$Ax = a' \cos(\pi - (\phi + \theta)) + b' \cos((\phi + \theta) - \pi/2)$$
$$= -a' \cos(\phi + \theta) + b' \sin(\phi + \theta) \quad \ldots\ldots\ldots (3)$$

In a controller according to the third embodiment, if the servo motor 2v in FIG. 2 is used as a servo motor driving the X-axis and the calculation processing section 8 in FIG. 2 is structured so that an acceleration Ax in the X-axis direction is determined by calculating the above equation (3), then a position command, a speed command or a current command can be corrected by multiplying the determined acceleration Ax by a coefficient a1, a coefficient a2 or a coefficient a3. Because no correction is made for the C-axis and D axis, the motor control sections of the servo motors of the C-axis and D axis use a conventional motor control section as illustrated in FIG. 7 respectively.

FIG. 6 is a view illustrating an aspect where a fourth embodiment of a controller according to the present invention controls a machine having a driving shaft and a rotating shaft affected by gravity.

In a case where the X-axis of the driving shaft driving the base 3a of the head 3 tilts and is not horizontal, determination of an acceleration in the direction of X-axis from accelerations detected by means of the acceleration detector 7 will be influenced by the gravity. To cope with this problem, therefore, this embodiment is configured to eliminate the influence of gravity to determine an acceleration in the X-axis direction.

An angle between a line connecting the center of the C-axis of a rotational axis with the front end of the tool T and the horizontal axis is taken as $\theta$. The angle $\theta$ is calculated by a position detector for detecting the rotational position of the C-axis or from a position command to the C-axis. A tilting angle $\phi$ from the horizontal plane is an inherent and unchanged value fixed when the hardware configuration of a machine is fixed, therefore this tilting angle $\phi$ can be set in advance in the controller. If the acceleration detector 7 is installed on the head 3, an acceleration of the tool T in the axial direction b detected by the acceleration detector 7 is taken as b', an acceleration in a direction a orthogonal to an axial direction b of the tool T is taken as a' and gravity is taken as g, then an acceleration Ax in the X-axis direction can be detected, with the influence of gravity excluded, by calculating the following equation (4):

$$Ax = -a' \sin(\theta - \phi) + b' \cos(\theta - \phi) \cdot g \sin\phi \quad \ldots\ldots\ldots (4)$$

In a controller according to the fourth embodiment, if the servo motor 2v in FIG. 2 is used as a servo motor driving the X-axis and the calculation processing section 8 in FIG. 2 is configured such that an acceleration Ax in the X-axis direction is determined by calculating the above equation (4), then a position command, a speed command or a current command can be corrected by multiplying the determined acceleration Ax by a coefficient a1, a coefficient a2 or a coefficient a3, thereby suppressing vibrations of the head 3 of a driven body and the tool T. Because no correction is made for the C-axis, the motor control section of the servo motor of the C-axis uses a conventional motor control section as illustrated in FIG. 7.

As described above, the fourth embodiment uses an acceleration detector capable of detecting accelerations in a plurality of directions, detects the acceleration of the driving shaft being affected by gravity by eliminating the influence of gravity and performs control so as to suppress vibrations generated at the driven body. In the case of a machine not having C-axis of the rotating shaft as illustrated in FIG. 6, if the driving shaft is affected by tilting gravity, accelerations in the directions of respective driving shaft in which the influence of gravity is excluded can be determined from the accelerations obtained with the acceleration detector in the same way as in the fourth embodiment.

The controller according to the above-mentioned respective embodiments has a motor control section equipped with a position control processing section, a speed control processing section and a current control processing section. However, the present invention is also applicable to a controller having a motor control section not equipped with a position control processing section.

**Claims**

1.  A controller, equipped with servo motors for driving a driven body in a plurality of driving shaft directions different from each other, respectively, and detection means for detecting speed of the driven body to control the speed of the driven body, the controller comprising:

    acceleration detection means which is installed on the driven body and detects accelerations in a plurality of directions;
    acceleration calculating means for determining accelerations in the directions of respective driving shafts for driving the driven body based on the acceleration detection values in a plurality of directions detected by the acceleration detection means; and
    command correction means for correcting speed commands and/or current commands of the servo motors for driving the driving shafts based on the accelerations in the directions of the respective driving shafts determined by the acceleration calculating means so as to suppress the driven body from vibrating.

2.  The controller according to Claim 1 wherein
    the acceleration detection means detects accelerations in two or three directions orthogonal to each other; and
    the acceleration calculating means calculates accelerations in the directions of the driving shafts of the driven body not parallel to the directions of the accelerations detected by the acceleration detection means, from the detected accelerations in two or three directions.

3.  The controller according to Claim 2, further comprising:

    displacement calculating means for calculating a displacement amount between the direction of the acceleration detected by the acceleration detection means and direction of the driving shaft for driving the driven body is provided; wherein
    the acceleration calculation means calculates an accelerations in the direction of the driving shaft of the driven body not parallel to the accelerations detected by the acceleration detection means from the accelerations in two or three directions detected by the acceleration detection means and a displacement amount detected by the displacement calculation means.

4.  The controller according to Claim 1 wherein
    the driven body is installed on a base equipped with a rotation driving shaft for swinging the driven body;
    the acceleration calculation means determines an acceleration in the driving direction of the driving shaft for driving the base from the acceleration detection values detected by the acceleration detection means; and
    the command correction means corrects a speed command and/or a current command of the servo motor for driving the base driving shaft, based on the accelerations determined by the acceleration calculation means.

5.  The controller according to Claim 1 wherein
    the controller controls the position of the driven body, in addition to the speed of the driven body, and
    the command correction means corrects a speed command of the servo motors for driving the driving shafts based on accelerations in the directions of the respective driving shafts determined by the acceleration calculating means, in addition to, or in place of, the speed command and/or current command of the servo motors.

6.  A controller, equipped with servo motors for driving a driven body in a plurality of driving shaft directions different from each other, respectively, and detection means for detecting the position of, or the position and speed of, the driven body to control the speeds of the driven body, comprises:

acceleration detection means which is installed on the driven body and detects accelerations in two or three directions orthogonal to each other;

displacement estimation means for estimating a displacement amount between a direction of the acceleration detected by the acceleration detection means and that of the driving shaft for driving the driven body based on a command position;

acceleration calculation means for determining an acceleration of the driven body in a traveling direction from the detected accelerations in the two or three directions detected by the acceleration detection means and the displacement amount detected by the displacement estimation means; and

command correction means for correcting at least one of a position command, a speed command and a current command of the servo motor for driving the associated driving shaft, based on the acceleration calculated by the acceleration calculation means.

7. The controller according to Claim 6 wherein

the driven body is installed on a base having a rotation driving shaft for swinging the driven body;

the acceleration calculation means determines an acceleration in the driving direction of the driving shaft for driving the base from the acceleration detection value detected by the acceleration detection means; and

the command correction means corrects at least one of a position command, a speed command and a current command of the servo motor for driving the base driving shaft based on the accelerations determined by the acceleration calculation means.

8. The controller according to Claim 1 or Claim 6 wherein

the acceleration calculation means determines an acceleration of a driving shaft affected by gravity by making such a calculation as to eliminate an influence of the gravity from a displacement amount between a direction of the driving shaft and a direction of the gravity.

ACCELERATION IN W-AXIS DIRECTION Aw = Ay

ACCELERATION IN Y-AXIS DIRECTION Ay

V AXIS

ACCELERATION IN
V-AXIS DIRECTION

$Av = Ay\cos\theta - Ax\sin\theta$

ACCELERATION IN X-AXIS DIRECTION  Ax

FIG. 1

FIG. 2

SPEED/POSITION DETECTORS (5, 6)

DRIVING DIRECTION OF DRIVEN BODY (X DIRECTION)

C

3a

3

7

T

FIG. 3

SPEED/POSITION DITECTORS (5, 6)

DRIVING DIRECTION OF DRIVEN BODY (X DIRECTION)

C

$\theta$

3a

$A x = a \cdot \sin \theta + b \cdot \cos \theta$

a'

$\theta$

b'

3

7

T

FIG. 4

SPEED/POSITION DITECTORS (5, 6)

DRIVING DIRECTION OF DRIVEN BODY (X DIRECTION)

3a    FIG. 5

C
$\theta$

$\phi$  D

3b

a'

$\pi - (\phi - \theta)$

Ax

$\phi + \theta - \pi / 2$

7    3

b'

T

SPEED/POSITION DETECTORS (5, 6)

$\phi$

DRIVING DIRECTION OF DRIVEN BODY (X DIRECTION)

3a

C
$\theta$

7

FIG. 6

$\phi$

3

$A_x = -a' \sin(\theta - \phi) + b' \cos(\theta - \phi) - g \sin\phi$

a'

b'    T

g

13

FIG. 7